# FASCICULE DE BREVET EUROPEEN

(11) **EP 2 322 420 B1**
(45) Date de publication et mention de la délivrance du brevet: **05.06.2013**
(21) Numéro de dépôt: 10306219.6
(22) Date de dépôt: 08.11.2010
(51) Int. Cl.: B63B 49/00, G10K 11/00, B63B 1/24, G01S 7/521

(54) **Véhicule naval de surface à bras instrumenté pivotant.**
Oberflächenwasserfahrzeug mit schwenkbarem Tragarm.für Instrumente.
Surface watercraft with pivoting instrument-carrying arm.

(30) Priorité: 17.11.2009 FR 0958095
(43) Date de publication de la demande: 18.05.2011
(73) Titulaire: ECA, 83130 La Garde (FR)
(72) Inventeur: Bergero, Didier, 83140, SIX FOURS (FR); Duchatelet, Vincent, 33000, BORDEAUX (FR); Scourzic, Daniel, 83130, LA GARDE (FR); Cazaoulou, Claude, 83320, CARQUEIRANNE (FR); Eteki, Richard, 83210, SOLLIES-VILLE (FR)
(74) Mandataire: Casalonga, Axel

(56) Documents cités:
- CA-A1- 989 254
- DE-B- 1 075 989
- US-A- 3 910 215
- US-A- 3 910 216
- US-A- 3 989 216
- US-A- 4 285 485
- US-A- 4 781 350
- US-A- 4 850 559
- US-A- 4 907 208
- US-A- 5 008 863
- US-A- 5 109 364
- US-A- 5 574 700
- US-A- 6 065 420
- US-B1- 7 036 451

## Description

La présente invention concerne le domaine des véhicules navals de surface utilisés pour réaliser des mesures relatives aux eaux marines ou douces et à leur cartographie, ou encore des détections et des observations sous l'eau.

Une application particulièrement intéressante de l'invention concerne donc les mesures hydrographiques. Bien entendu, l'invention peut également être utilisée dans d'autres applications, par exemple pour la détection d'objets sous-marins.

Classiquement, de tels véhicules comportent un corps, des moyens de propulsion, et des capteurs de mesure ou de détection montés dans des cavités prévues sur le fond dudit corps.

Pour effectuer ces mesures ou détections, le véhicule naval de surface est généralement amené par remorquage à proximité de la zone subaquatique devant être étudiée, puis mis à l'eau. Il rallie ensuite à grande vitesse la zone subaquatique et passe au-dessus de cette zone à vitesse réduite pour l'acquisition de données.

Lorsque le véhicule naval est placé sur la remorque, compte tenu de leur disposition, les capteurs peuvent subir des détériorations susceptibles de fausser, voire empêcher les mesures à réaliser. De telles détériorations peuvent également subvenir en cas de chocs avec des objets flottants lorsque le véhicule naval se déplace à grande vitesse à la surface de l'eau.

Or, une fois le véhicule mis à l'eau, il n'est plus possible de remplacer les capteurs s'ils sont endommagés. De façon similaire, si d'autres types de mesures doivent finalement être effectuées pour l'étude de la zone subaquatique, il n'est plus possible de monter d'autres capteurs.

Par ailleurs, le ou les capteurs peuvent être partiellement en saillie en dehors de leurs cavités formant ainsi des appendices sur le fond du corps. Ceci accroît le risque d'endommagement de ces capteurs et augmente la résistance à l'avancement du véhicule, notamment lors d'un déplacement à grande vitesse.

On connaît, par le brevet US 5,008,863, qui est considéré comme étant l'état de la technique le plus proche, un véhicule naval de surface comprenant une coque, deux bras parallèles montés à rotation sur la coque autour d'un axe horizontal par l'intermédiaire d'une traverse, et une aile montée à l'extrémité inférieure des bras et à l'intérieur de laquelle sont prévus des sonars pour permettre de réaliser des mesures subaquatiques.

Le véhicule naval décrit dans ce brevet américain a pour inconvénient de présenter un encombrement latéral relativement important lorsque les bras montés latéralement de part et d'autre de la coque sont dans une position basse permettant de réaliser les mesures subaquatiques. Par ailleurs, lors de la réalisation de ces mesures qui s'effectuent généralement à vitesse réduite, le véhicule peut être sujet à des mouvements latéraux inopinés pouvant fausser les mesures effectuées par les sonars prévus à l'intérieur de l'aile s'étendant transversalement entre les bras.

La présente invention vise à remédier à ces inconvénients.

Plus particulièrement, la présente invention vise à prévoir un véhicule naval de surface qui peut être facilement transporté sans risque de détérioration de moyens capteurs, présentant une résistance réduite à l'avancement et adapté pour permettre de manière aisée un changement des moyens capteurs même lorsque le véhicule est déjà mis à l'eau.

L'invention vise encore à prévoir un véhicule naval de surface adapté pour réaliser des mesures ou des détections subaquatiques qui soit de faible coût, facile à utiliser, et dont la maintenance est facilitée.

La présente invention vise également à prévoir un véhicule naval de surface présentant un encombrement réduit et permettant l'obtention de mesures fiables.

Dans un mode de réalisation, le véhicule naval de surface comporte un corps, des moyens de propulsion du corps, au moins un moyen capteur, et au moins un moyen de support du moyen capteur monté sur le corps. Le moyen de support est mobile par rapport audit corps entre une première position dans laquelle le moyen capteur est situé au-dessous d'une ligne de flottaison du corps, et plus généralement du véhicule, et une seconde position dans laquelle le moyen capteur est situé au-dessus de ladite ligne de flottaison. Le moyen de support est situé dans un plan médian longitudinal du corps. Le moyen de support s'étend sensiblement verticalement au-delà d'une surface inférieure du corps dans la première position et est dimensionné de manière à former une dérive de stabilisation du véhicule.

Avantageusement, le moyen capteur est situé au-dessus d'une surface supérieure du corps dans la seconde position du moyen de support.

Dans un mode de réalisation, le moyen de support est monté à rotation sur le corps autour d'un axe sensiblement horizontal transversal ou perpendiculaire au plan médian du corps. Le corps peut comporter une fente longitudinale à l'intérieur de laquelle est fixé un arbre d'articulation du moyen de support et à l'intérieur de laquelle s'étend en partie ledit moyen de support. Le moyen de support pivote à l'intérieur de la fente.

Dans un autre mode de réalisation, le moyen de support est télescopique et pourvu d'une extrémité mobile en translation par rapport au corps qui supporte le ou les moyens capteurs.

Préférentiellement, le moyen de support peut avantageusement être situé à l'opposé des moyens de propulsion en considérant le sens longitudinal du corps. Le moyen capteur peut être monté à une extrémité du bras de support.

Dans un mode de réalisation, le véhicule comprend des moyens d'actionnement du moyen de support. Les moyens d'actionnement peuvent comporter un moteur électrique et un réducteur à roue et vis sans fin formant organe de blocage irréversible du moyen de support dans les première et seconde positions dudit bras. Bien entendu, tout autre moyen d'entraînement du moyen de support pourrait être utilisé, par exemple un vérin linéaire ou autre. Le véhicule peut également comprendre au moins un capteur de détection de la position du moyen de support relativement au corps et une unité de commande apte à contrôler le fonctionnement des moyens d'actionnement en fonction de la position détectée du moyen de support.

Dans un mode de réalisation, le véhicule comprend une platine supportant le moyen capteur et montée sur le moyen de support. La platine peut être montée à une extrémité du moyen de support. La platine est avantageusement mobile à rotation relativement au moyen de support autour d'un axe longitudinal dudit moyen de support. Le véhicule peut comprendre une unité de commande apte à déterminer une orientation angulaire de la platine relativement au moyen de support en fonction d'une route théorique à suivre par le véhicule et apte à maintenir par asservissement l'orientation angulaire de la platine selon la route théorique à suivre. La platine peut également être mobile à rotation relativement au moyen de support autour d'un axe transversal audit moyen de support.

Grâce à l'invention, lorsque le véhicule naval de surface est à l'eau, le moyen de support peut être déplacé de la position basse active du ou des moyens capteurs dans laquelle lesdits moyens sont situés en-dessous de la ligne de flottaison du véhicule vers une position haute inactive dans laquelle les moyens capteurs sont situés au-dessus de la ligne de flottaison. Ceci est notamment le cas lorsque la ou les campagnes de mesures sont terminées, ou encore lorsque le ou les moyens capteurs doivent être remplacés afin d'effectuer une autre campagne de mesures différente de celles venant d'être réalisées. La platine porte-capteurs peut être spécifique aux moyens capteurs. Pour changer ces moyens capteurs, il convient de remplacer la platine par une autre platine similaire sur laquelle ont été montés les nouveaux moyens capteurs. Dans la position inactive des moyens capteurs, le moyen de support est relevé, et dans la position active, le moyen de support est abaissé.

Lors du déplacement à grande vitesse du véhicule avec le ou les moyens capteurs dans la position haute, ni les moyens capteurs, ni le moyen de support ne viennent en saillie par rapport à la surface immergée du corps, ce qui permet d'offrir une résistance réduite à l'avancement et de faciliter la manoeuvre du véhicule. Dans la position relevée du moyen de support, le véhicule peut également être monté sur une remorque avec un risque limité de détérioration des moyens capteurs.

En outre, lors de la réalisation des mesures au niveau de la zone subaquatique à étudier qui s'effectuent à vitesse réduite, le moyen de support qui s'étend sensiblement verticalement au-delà de la surface inférieure immergée du corps est dimensionné de manière à former une dérive permettant de stabiliser le véhicule et d'éviter des mouvements latéraux inopinés pouvant fausser les mesures effectuées. Ceci peut être particulièrement utile lors de forts mouvements de houle. La section du moyen de support est adaptée de manière à ce que ledit moyen présente une rigidité suffisante pour ne pas générer de vibrations ou de roulis supplémentaires par rapport au corps afin d'obtenir une bonne fiabilité pour les mesures réalisées. A titre indicatif, le moyen de support peut être conçu pour résister à des courants marins frontaux de sept noeuds et dans les autres directions de deux noeuds. Le moyen de support est avantageusement profilé d'un point de vue hydrodynamique. La dérive de stabilisation contribue à la tenue de la route fixée. En outre, la disposition du moyen de support dans le plan médian longitudinal du véhicule est avantageuse car cela permet de limiter les phénomènes de roulis au niveau du ou des capteurs.

Pour l'obtention de mesures fiables, il est également préférable que les remous provoqués par les moyens de propulsion n'atteignent pas la zone dans laquelle se trouvent immergés le ou les moyens capteurs dans la position basse. A cet égard, le moyen de support peut être monté sur le corps dans une zone avant du corps opposée dans le sens longitudinal à la zone arrière au niveau de laquelle sont prévus les moyens de propulsion. Avantageusement, le moyen de support est disposé entre le tiers et le quart avant du corps.

Par ailleurs, le montage du ou des moyens capteurs sur une platine mobile à rotation relativement au moyen de support autour d'un axe longitudinal dudit moyen s'étendant sensiblement verticalement dans la position abaissée permet, lors des campagnes de mesures, de maintenir l'orientation de la platine et des capteurs selon la route fixée malgré le vent, la houle et les éventuels courants de surface pouvant conduire à maintenir le véhicule de façon que son axe longitudinal soit légèrement décalé par rapport à ladite route.

La présente invention sera mieux comprise à la lecture de la description détaillée d'un mode de réalisation pris à titre d'exemple nullement limitatif et illustré par les dessins annexés, sur lesquels :
- les figures 1 et 2 sont des vues schématiques de côté d'un véhicule naval de surface selon l'invention,
- la figure 3 est une vue en perspective éclatée partielle du véhicule des figures 1 et 2.

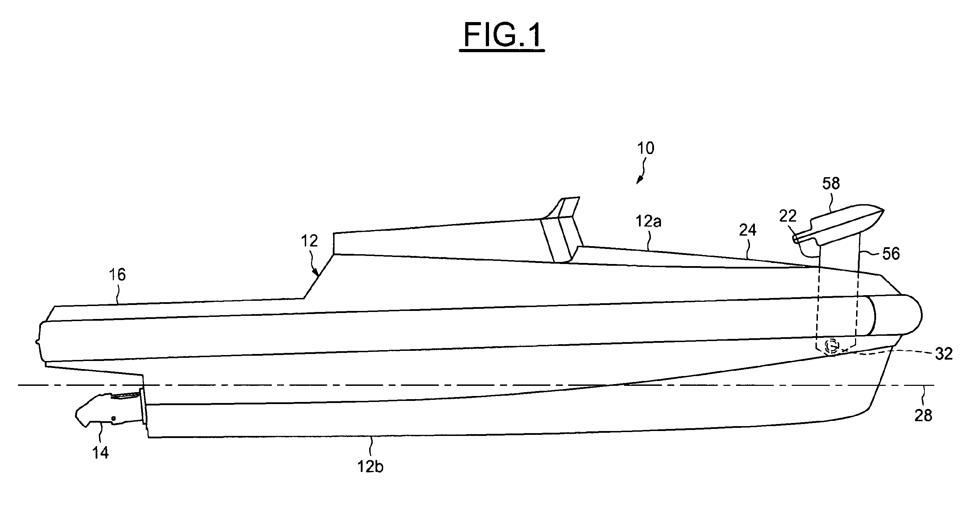

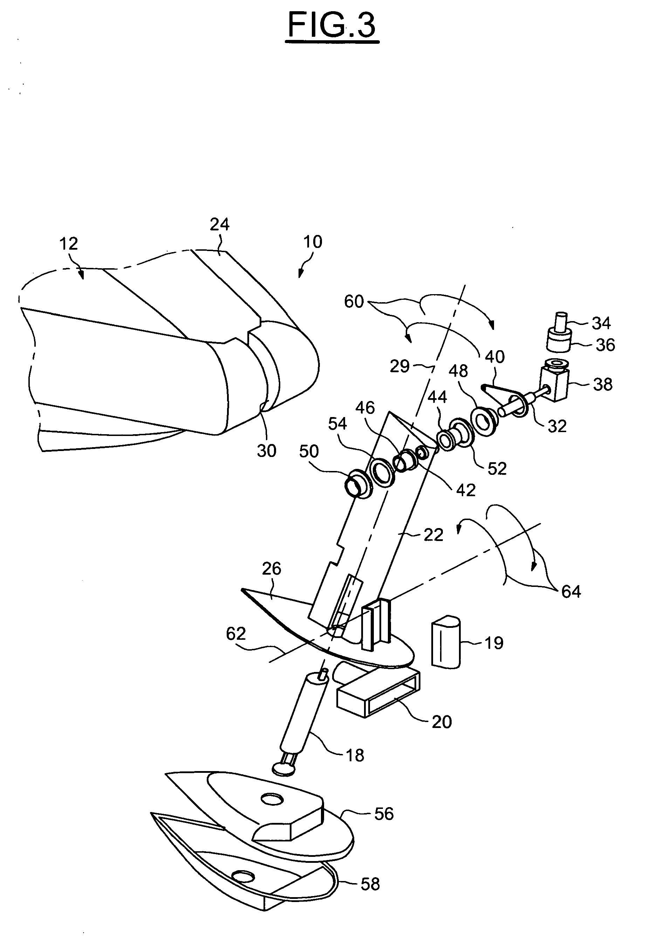

Sur les figures 1 à 3, on a représenté une embarcation ou véhicule naval de surface, désigné par la référence numérique générale 10, et adapté pour pouvoir réaliser des mesures hydrographiques ou encore pour détecter des objets sous-marins.

Le véhicule 10 comporte principalement un corps 12, de forme générale allongée, des moyens de propulsion 14 situés dans une zone arrière 16 ou poupe dudit corps, des capteurs 18, 19 et 20, et un bras 22 de support desdits capteurs articulé à rotation dans une zone avant 24 ou proue du corps. Les capteurs 18 à 20 sont fixés à l'extrémité libre du bras 22 de support par l'intermédiaire d'une platine 26, comme cela sera décrit plus en détail par la suite.

Les capteurs peuvent par exemple être des sondeurs multifaisceaux permettant d'obtenir des relevés bathymétriques des reliefs sous-marin, des sondeurs de sédiments adaptés pour identifier la nature des fonds sous-marins, des sondeurs acoustiques, des détecteurs d'objets sous-marins, etc. A titre indicatif, le capteur 18 peut par exemple être un célérimètre acoustique, le capteur 19 un capteur inertiel de position et d'altitude, et le capteur 20 un sonar. Les capteurs 18 à 20 sont ici au nombre de trois. Bien entendu, il est possible de prévoir un nombre différent de capteurs sur le bras 22 de support et d'autres types de capteurs.

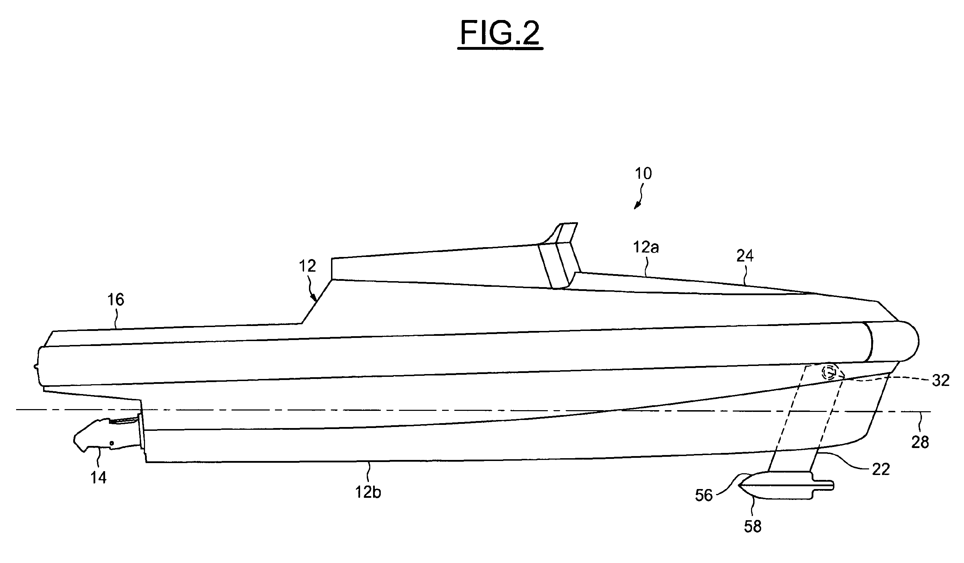

Le bras 22 de support est monté à rotation sur le corps 12 autour d'un axe géométrique sensiblement horizontal s'étendant transversalement au plan médian longitudinal dudit corps. Il est mobile entre une position relevée dans laquelle les capteurs 18 à 20 sont situés au-dessus d'une ligne de flottaison 28 du véhicule comme cela est représenté à la figure 1, et une position abaissée dans laquelle les capteurs sont situés en-dessous de ladite ligne comme illustré à la figure 2. La ligne de flottaison 28 est représentée schématiquement en pointillés sur les figures.

Plus précisément, dans la position relevée du bras 22 de support, les capteurs 18 à 20 sont situés verticalement au-dessus d'une surface supérieure 12a du corps 12, l'extrémité dudit bras s'étendant en saillie au-delà de ladite surface. Cette position est adaptée lors du déplacement du véhicule 10 à grande vitesse de façon à offrir une résistance réduite à l'avancement et à faciliter les manoeuvres. En outre, lors d'une campagne de mesures en mer, en cas de défaillance d'un des capteurs 18 à 20 ou encore si d'autres types de mesures doivent être effectuées, il est possible de les remplacer aisément en remontant le bras dans cette position. Dans cette position relevée, le bras 22 de support s'étend verticalement vers le haut. Dans la position abaissée dudit bras, les capteurs 18 à 20 sont situés verticalement au-dessous d'une surface inférieure 12b du corps 12 immergée formant fond, l'extrémité du bras 22 de support étant en saillie par rapport à ladite surface inférieure de manière à former une dérive. Ceci tend à stabiliser le véhicule lors de réalisation de campagnes de mesures s'effectuant à vitesse réduite. Dans cette position, le bras 22 de support illustré s'étend sensiblement verticalement. On entend ici par « sensiblement vertical », un angle formé entre l'axe d'allongement ou axe longitudinal 29 du bras 22 de support et un axe vertical qui est inférieur à 30°.

Afin de permettre le pivotement du bras de support 22, le corps 12 comporte, dans la zone avant 24, une fente 30 longitudinale s'étendant à partir de l'extrémité avant sur l'ensemble de la hauteur dudit corps. La fente 30 permet le logement et le pivotement du bras 22 de support. La fente 30 et le bras 22 sont situés dans le plan médian longitudinal du corps 12.

Pour obtenir la rotation du bras 22, un arbre 32 d'articulation est prévu à l'intérieur de la fente. Le bras 22 est lié à rotation avec l'arbre 32 d'articulation. Le bras 22 de support est articulé à rotation sur le corps 12 à l'opposé des moyens de propulsion 14, en considérant le sens longitudinal dudit corps. Dans la position basse du bras 22 de support, on évite ainsi que les capteurs 18 à 20 soient situés dans le flux d'eau brassée par les moyens de propulsion 14.

Pour permettre l'entraînement en rotation de l'arbre 32 d'articulation et du bras 22 de support, le véhicule 10 comporte un moteur 34 électrique d'axe vertical associé à un réducteur 36 coaxial, lui-même connecté à un réducteur 38 à roue et vis sans fin adapté pour assurer l'accouplement de l'arbre 32 d'articulation dans l'arbre creux dudit réducteur de façon à ce que l'arbre 32 s'étende sensiblement horizontalement. Le moteur 34 et les réducteurs 36, 38 sont montés dans un logement (non visible) ménagé dans la zone avant 24 du corps 12. Pour éviter la rotation du réducteur 38, une bride 40 est prévue et vient se fixer sur le corps 12.

L'arbre 32 d'articulation s'étend dans un évidement 42 traversant du bras 22 de support ménagé dans son épaisseur et situé à l'extrémité opposée à celle sur laquelle est disposée la platine 26. De part et d'autre du bras 22 sont prévues en appui contre celui-ci des bagues 44, 46 étanches annulaires montées autour de l'arbre 32 d'articulation. Un premier palier 48 est monté sur l'arbre 32 d'articulation entre le bras 22 de support et la bride 40, un second palier 50 étant disposé sur ledit arbre 32 à l'opposé du palier 48 en considérant le bras 22. Les paliers 48, 50 sont respectivement fixés, par exemple par vissage, à des brides 52, 54 annulaires montées autour de l'arbre 32 d'articulation, lesdites brides étant assujetties au corps 12 par exemple par soudage.

De manière à réduire les efforts de traînée hydrodynamique au niveau de la platine 26 lorsque le bras 22 de support est dans la position abaissée, des carénages 56, 58 sont prévus autour de ladite platine en étant fixés l'un contre l'autre. La platine 26 est ainsi encapsulée à l'intérieur de ces carénages 56, 58. Les capteurs 18 à 20 sont fixés sur la platine 26 par tout moyen approprié. La platine 26 est montée à l'extrémité du bras 22 de support avec possibilité de rotation autour de l'axe 29 longitudinal dudit bras. Cette possibilité de rotation est illustrée par les flèches référencées 60. A cet égard, un moteur (non représenté) est monté à l'intérieur des carénages 56, 58. Cette possibilité de rotation de la platine 26 autour de l'axe 29, qui est orthogonal à l'axe géométrique autour duquel pivote le bras 22, est avantageuse dans la mesure où cela permet, pendant les campagnes de mesures, de maintenir l'orientation des capteurs 18 à 20 selon la route fixée même en présence de vent, de houle, et de courants de surface pouvant obliger à diriger le véhicule 10 de manière que son axe soit légèrement décalé par rapport à ladite route. Les câbles permettant l'alimentation des capteurs 18 à 20 et du moteur sont fixes et s'étendent à l'intérieur du bras 22.

Avantageusement, la platine 26 peut également être montée sur le bras 22 avec possibilité de rotation autour d'un axe 62 horizontal qui est orthogonal ou transversal à l'axe 29 et parallèle à l'axe géométrique autour duquel pivote le bras 22. Cette rotation de la platine peut être réalisée manuellement ou de façon motorisée lorsque le bras 22 de support est dans la position relevée de manière à compenser l'horizontalité du véhicule 10. Cette possibilité de rotation est illustrée par les flèches référencées 64.

Le véhicule 10 est encore pourvu d'une unité de commande électrique (non représentée) apte à assurer le contrôle de fonctionnement du moteur 34 et du moteur permettant la rotation de la platine 26 par rapport au bras 22, et de capteurs de fin de course (non représentés) permettant de détecter lorsque le bras 22 de support a atteint les positions relevée et abaissée.

L'unité de commande comprend, stockés en mémoire, tous les moyens matériels et logiciels permettant de procéder au contrôle de fonctionnement du moteur 34 à partir des mesures faites par les capteurs de fin de course. En remplacement de ces capteurs, il pourrait être possible de prévoir alternativement un capteur de détection de la position angulaire du bras 22. Un capteur couplé au moteur 34 électrique est également prévu pour permettre de détecter tout obstacle venant gêner le pivotement du bras 22. Cette détection peut par exemple être réalisée par contrôle du courant d'alimentation électrique du moteur 34.

L'unité de commande permet également de déterminer une direction moyenne à prévoir pour la platine 26 en fonction de la route à suivre par le véhicule 10 et de maintenir par asservissement cette position en commandant si besoin le déplacement angulaire de la platine 26 par rapport au bras 22 autour de l'axe 29 de façon que les capteurs 18 à 20 soient orientés selon la route à suivre même en présence de vents, de houle ou de courants de surface. En d'autres termes, l'unité de commande permet de déterminer l'orientation angulaire à prévoir pour la platine 26 par rapport au bras 22 en fonction de la route théorique prédéterminée à suivre par le véhicule 10 pour atteindre le point géographique souhaité. L'unité de commande permet également de maintenir par asservissement, en commandant le moteur associé à la platine, l'orientation angulaire de ladite platine selon la route théorique à suivre, même lorsque l'axe longitudinal du véhicule 10 doit être légèrement décalé par rapport à cette route théorique à suivre, par exemple en présence de vent, de houle ou d'éventuels courants de surface.

Dans ce but, le véhicule 10 est équipé d'un moyen de positionnement, par exemple du type GPS, permettant à tout instant de connaître la route réelle suivie par le véhicule. A chaque instant, l'unité de commande peut déterminer l'écart angulaire existant entre la route théorique à suivre et la route réelle suivie par le véhicule. L'unité de commande peut donc déterminer l'orientation angulaire que doit prendre la platine 26 pour rester orientée selon la route théorique à suivre pour atteindre le point géographique souhaité, puis commander le déplacement angulaire de la platine autour de l'axe 29 en pilotant le moteur associé à ladite platine.

L'unité de commande peut permettre le contrôle automatique de la trajectoire du véhicule 10 et du déplacement du bras 22 dans des conditions de navigation prédéfinies, par exemple lorsque le véhicule est à l'arrêt ou lorsqu'il navigue à vitesse réduite. Alternativement, il peut être possible de commander le déplacement du véhicule 10 et le pivotement du bras 22 à distance par un opérateur, ou encore de prévoir un opérateur présent directement sur le véhicule 10 agissant au niveau d'un poste de commande.

Grâce à l'invention, on dispose d'un véhicule naval de surface comportant un bras instrumenté monté à rotation sur le corps ou coque de manière à pouvoir être déplacé d'une position extrême haute dans laquelle ledit bras et le ou les moyens capteurs sont situés au-dessus de la ligne de flottaison de façon à ne pas augmenter la résistance à l'avancement du véhicule lors d'une phase d'approche de la zone subaquatique à étudier, à une position extrême basse dans laquelle au moins une partie dudit bras et le ou les moyens capteurs sont situés en-dessous de la ligne de flottaison.

Par ailleurs, l'utilisation d'un moteur électrique associé à un réducteur à roue et vis sans fin pour l'entraînement en rotation du bras de support et la mise à l'eau des capteurs est avantageuse dans la mesure où le réducteur forme un moyen de blocage du bras de support dans la position relevée et la position abaissée. Il n'est donc pas nécessaire de prévoir à cet effet des moyens additionnels. Plus précisément, le réducteur forme un moyen de blocage irréversible possédant un nombre infini de positions permettent de maintenir le bras sans apport d'énergie. En d'autres termes, le réducteur forme un dispositif de sécurité prévenant tout mouvement du bras en cas de défaut d'alimentation du moteur en énergie électrique.

Dans une variante de réalisation, il est possible, sans sortir du cadre de la présente invention, de prévoir d'autres types de conception pour le moyen de support du ou des capteurs. Il peut par exemple être prévu un bras télescopique dont une extrémité comportant les capteurs est mobile en translation par rapport au corps de manière à permettre le passage desdits moyens entre une position haute au-dessus de la ligne de flottaison du véhicule et une position basse située au-dessous de ladite ligne.

## Revendications

1. Véhicule naval de surface comportant un corps (12), des moyens de propulsion (14) du corps, au moins un moyen capteur (18) pour la réalisation de mesures hydrographiques ou la détection d'objets sous-marins, et au moins un moyen de support (22) du moyen capteur monté sur le corps en étant mobile par rapport audit corps entre une première position dans laquelle le moyen capteur est situé au-dessous d'une ligne de flottaison (28) du véhicule lors d'un déplacement à vitesse réduite et une seconde position dans laquelle le moyen capteur est situé au-dessus de ladite ligne de flottaison lors d'un déplacement à grande vitesse, **caractérisé en ce que** le moyen de support (22) est situé dans un plan médian longitudinal du corps, et **en ce que** ledit moyen de support s'étend sensiblement verticalement au-delà d'une surface inférieure (12b) du corps dans la première position et est dimensionné pour former une dérive de stabilisation du véhicule lors du déplacement à vitesse réduite de manière à éviter des mouvements latéraux inopinés dudit véhicule.

2. Véhicule selon la revendication 1, dans lequel le moyen capteur (18) est situé au-dessus d'une surface supérieure (12a) du corps dans la seconde position du moyen de support.

3. Véhicule selon la revendication 1 ou 2, dans lequel le moyen de support (22) est monté à rotation sur le corps autour d'un axe sensiblement transversal à un plan médian longitudinal dudit corps.

4. Véhicule selon la revendication 3, dans lequel le corps (12) comporte une fente (30) longitudinale à l'intérieur de laquelle est fixé un arbre d'articulation (32) du moyen de support et à l'intérieur de laquelle s'étend en partie ledit moyen de support.

5. Véhicule selon la revendication 1 ou 2, dans lequel le moyen de support est télescopique et pourvu d'une extrémité mobile en translation par rapport au corps supportant le moyen capteur.

6. Véhicule selon l'une quelconque des revendications précédentes, comprenant une platine (26) supportant le moyen capteur (18) et montée sur le moyen de support (22).

7. Véhicule selon la revendication 6, dans lequel la platine (26) est montée à une extrémité du moyen de support (22).

8. Véhicule selon la revendication 6 ou 7, dans lequel la platine (26) est mobile à rotation relativement au moyen de support (22) autour d'un axe longitudinal (29) dudit moyen de support.

9. Véhicule selon la revendication 8, comprenant une unité de commande apte à déterminer une orientation angulaire de la platine relativement au moyen de support en fonction d'une route théorique à suivre par le véhicule et apte à maintenir par asservissement l'orientation angulaire de la platine selon ladite route théorique.

10. Véhicule selon l'une quelconque des revendications précédentes, dans lequel le moyen de support (22) est situé longitudinalement à l'opposé des moyens de propulsion (14).

11. Véhicule selon l'une quelconque des revendications précédentes, comprenant des moyens d'actionnement (34, 36, 38) du moyen de support.

12. Véhicule selon la revendication 11, dans lequel les moyens d'actionnement comprennent un moteur (34) électrique et un réducteur (38) à roue et vis sans fin formant organe de blocage du moyen de support dans les première et seconde positions.

13. Véhicule selon la revendication 11 ou 12, comprenant au moins un capteur de détection de la position du moyen de support (22) relativement au corps et une unité de commande apte à contrôler le fonctionnement des moyens d'actionnement (34, 36, 38) en fonction de la position détectée.

14. Véhicule selon l'une quelconque des revendications 12 à 14, dans lequel la platine (26) est mobile à rotation relativement au moyen de support (22) autour d'un axe transversal audit moyen de support.

15. Moyen de support pour la réalisation d'un véhicule naval selon l'une quelconque des revendications précédentes.

## Patentansprüche

1. Überwasserfahrzeug, das einen Körper (12), Antriebsmittel (14) des Körpers, mindestens ein Sensormittel (18) zur Ausführung hydrografischer Messungen oder zum Erfassen von Unterwasserobjekten und mindestens ein Tragmittel (22) des Sensormittels aufweist, das auf den Körper in Bezug zu dem Körper zwischen einer ersten Position, in der das Sensormittel unterhalb einer Wasserlinie (28) des Fahrzeugs bei einem Fahren mit niedriger Geschwindigkeit liegt, und einer zweiten Position, in der das Sensormittel oberhalb der Wasserlinie bei einem Fahren mit großer Geschwindigkeit liegt, beweglich montiert ist, **dadurch gekennzeichnet, dass** das Tragmittel (22) in einer mittleren Längsebene des Körpers liegt und dass sich das Tragmittel im Wesentlichen vertikal über eine untere Oberfläche (12b) des Körpers in der ersten Position erstreckt und bemessen ist, um ein Stabilisationsschwert des Fahrzeugs bei dem Fahren mit niedriger Geschwindigkeit derart zu bilden, dass unerwartete seitliche Bewegungen des Fahrzeugs vermieden werden.

2. Fahrzeug nach Anspruch 1, bei dem das Sensormittel (18) oberhalb einer oberen Oberfläche (12a) des Körpers in der zweiten Position des Tragmittels liegt.

3. Fahrzeug nach Anspruch 1 oder 2, bei dem das Tragmittel (22) drehend auf dem Körper um eine Achse, die zu einer mittleren Längsebene des Körpers im Wesentlichen quer ist, montiert ist.

4. Fahrzeug nach Anspruch 3, bei dem der Körper (12) einen Längsschlitz (30) aufweist, in dessen Innerem eine Gelenkwelle (32) des Tragmittels befestigt ist und in dessen Innerem sich ein Teil des Tragmittels erstreckt.

5. Fahrzeug nach Anspruch 1 oder 2, bei dem das Tragmittel teleskopisch und mit einem in Verschiebung in Bezug zu dem Körper, der das Sensormittel trägt, beweglichen Ende versehen ist.

6. Fahrzeug nach einem der vorhergehenden Ansprüche, das eine Platte (26) aufweist, die das Sensormittel (18) trägt und die auf das Tragmittel (22) montiert ist.

7. Fahrzeug nach Anspruch 6, bei dem die Platte (26) an einem Ende des Tragmittels (22) montiert ist.

8. Fahrzeug nach Anspruch 6 oder 7, bei dem die Platte (26) drehend in Bezug zu dem Tragmittel (22) um eine Längsachse (29) des Tragmittels beweglich ist.

9. Fahrzeug nach Anspruch 8, das eine Steuereinheit aufweist, die geeignet ist, um eine Winkelausrichtung der Platte in Bezug zu dem Tragmittel in Abhängigkeit von einer theoretischen von dem Fahrzeug zu verfolgenden Route zu bestimmen, und geeignet ist, um durch Steuerung die Winkelausrichtung der Platte entlang der theoretischen Route aufrechtzuerhalten.

10. Fahrzeug nach einem der vorhergehenden Ansprüche, bei dem das Tragmittel (22) längs den Antriebsmitteln (14) gegenüberliegt.

11. Fahrzeug nach einem der vorhergehenden Ansprüche, das Betätigungsmittel (34, 36, 38) des Tragmittels aufweist.

12. Fahrzeug nach Anspruch 11, bei dem die Betätigungsmittel einen Elektromotor (34) und ein Getriebe (38) mit Rad und Schraube aufweisen, die ein Blockierungsorgan des Tragmittels in der ersten und der zweiten Position bilden.

13. Fahrzeug nach Anspruch 11 oder 12, das wenigstens einen Sensor zum Erfassen der Position des Tragmittels (22) in Bezug zu dem Körper und eine Steuereinheit aufweist, die geeignet ist, um den Betrieb der Betätigungsmittel (34, 36, 38) in Abhängigkeit von der erfassten Position zu steuern.

14. Fahrzeug nach einem Anspruch 12 oder 14, bei dem die Platte (26) in Drehung in Bezug zu dem Tragmittel (22) um eine Achse, die zu dem Tragmittel quer ist, beweglich ist.

15. Tragmittel zum Herstellen eines Wasserfahrzeugs nach einem der vorhergehenden Ansprüche.

## Claims

1. Naval surface vehicle comprising a body (12), means (14) for the propulsion of the body, at least one sensing means (18) for carrying out hydrographic measurements or the detection of submarine objects, and at least one means (22) for supporting the sensing means mounted on the body and being able to move relative to the said body between a first position in which the sensing means is situated beneath a waterline (28) of the vehicle when moving at reduced speed and a second position in which the sensing means is situated above the said waterline when moving at high speed, **characterized in that** the supporting means (22) is situated in a longitudinal mid-plane of the body, and **in that** the said supporting means extends substantially vertically beyond a bottom surface (12b) of the body in the first position and is dimensioned to form a stabilizing fin of the vehicle when moving at reduced speed so as to avoid unintended lateral movements of said vehicle.

2. Vehicle according to Claim 1, in which the sensing means (18) is situated above a top surface (12a) of the body in the second position of the supporting means.

3. Vehicle according to Claim 1 or 2, in which the supporting means (22) is mounted so as to rotate on the body about an axis substantially transverse to a longitudinal mid-plane of the said body.

4. Vehicle according to Claim 3, in which the body (12) comprises a longitudinal slot (30) inside which is attached a shaft (32) for articulating the supporting means and inside which the said supporting means partly extends.

5. Vehicle according to Claim 1 or 2, in which the supporting means is telescopic and provided with an end that can move in translation relative to the body supporting the sensing means.

6. Vehicle according to any one of the preceding claims, comprising a plate (26) supporting the sensing means (18) and mounted on the supporting means (22).

7. Vehicle according to Claim 6, in which the plate (26) is mounted at one end of the supporting means (22).

8. Vehicle according to Claim 6 or 7, in which the plate (26) is able to rotate relative to the supporting means (22) about a longitudinal axis (29) of the said supporting means.

9. Vehicle according to Claim 8, comprising a control unit capable of determining an angular orientation of the plate relative to the supporting means and depending on a theoretical route to be followed by the vehicle and capable of maintaining, by closed-loop control, the angular orientation of the plate on the said theoretical route.

10. Vehicle according to any one of the preceding claims, in which the supporting means (22) is situated longitudinally at the opposite end from the propulsion means (14).

11. Vehicle according to any one of the preceding claims, comprising means (34, 36, 38) for actuating the supporting means.

12. Vehicle according to Claim 11, in which the actuation means comprise an electric motor (34) and a wheel-and-worm reduction gear (38) forming a member for immobilizing the supporting means in the first and second positions.

13. Vehicle according to Claim 11 or 12, comprising at least one sensor for detecting the position of the supporting means (22) relative to the body and a control unit capable of controlling the operation of the actuation means (34, 36, 38) depending on the detected position.

14. Vehicle according to either of Claims 12 and 14, in which the plate (26) can rotate relative to the supporting means (22) about an axis that is transverse to the said supporting means.

15. Supporting means for the production of a naval vehicle according to any one of the preceding claims.
